# EUROPEAN PATENT SPECIFICATION

(11) **EP 1 271 971 B1**
(45) Date of publication and mention of the grant of the patent: **31.05.2006**
(21) Application number: 02100663.0
(22) Date of filing: 04.06.2002
(51) Int. Cl.: H04Q 7/22

(54) **Method and system for transmitting messages in a telecommunication system**
Verfahren und System zur Übertragung von Nachrichten in einem Telekommunikationsystem
Méthode et système pour la transmission de messages dans un système de télécommunication

(30) Priority: 07.06.2001 FI 20011209
(43) Date of publication of application: 02.01.2003
(73) Proprietor: TeliaSonera Finland Oyj, 00510 Helsinki (FI)
(72) Inventor: Silventoinen, Marko, 00550, Helsinki (FI); Kalliomäki, Seppo, 01350, Vantaa (FI)
(74) Representative: Peltonen, Antti Sakari

(56) References cited:
- EP-A- 1 073 243
- WO-A-00/02371

## Description

### BACKGROUND OF THE INVENTION

The invention relates to transmission of messages with text-mode contents in a telecommunication system and particularly in a mobile system, or in a telecommunication system comprising a mobile system.

In addition to normal speech and data connections set up on traffic channels in digital mobile systems, short text-mode messages sent on system control channels can be transmitted between actual signalling. These messages are generally referred to as short messages. In order to implement short message service (SMS), mobile systems are provided e.g. with a short message service centre that forwards short messages, and stores and resends short messages that have not been delivered. The short message service centre can receive a short message via any network for transmission to a terminal, or a short message formed e.g. by means of a keypad from a terminal for delivery to another terminal or some other destination.

Short messages can be used e.g. to transmit text-mode information between mobile system subscribers. Short messages can also be used to provide subscribers with various text-mode services. Document WO 00/02371 discloses an example of an application utilizing short message service.

Writing of short messages with a limited keypad of a mobile station is typically slow and difficult. Furthermore, a length of a short message is usually rather limited, for example 160 characters. A possible solution to these problems is the use of various abbreviations. In other words, shortening the words to be transmitted in a short message can expedite, on the one hand, the time needed to create a short message and, on the other hand, enable more information to be fitted into a restricted message length. A problem with abbreviations is that the receiver does not necessarily understand their meaning.

A possible solution to this problem is use of well-known abbreviations. However, this arrangement restricts the use of abbreviations, since not all words have an established abbreviation. Furthermore, it still does not ensure that the receiver understands the abbreviation correctly since even common abbreviations may be open to interpretations or may have various meanings.

According to another prior art arrangement, a terminal can be provided with predictive input of text that facilitates and expedites particularly the input of text with a restricted keypad, thus reducing a need for abbreviations. A problem of this arrangement is that it does not eliminate the restriction on the message length, since the text is written out in full length already during the creation of the message.

Document EP 1073243 A1 discloses a SMS communication system comprising a value added service platform, which translates a received command in a SMS message to one more command lines by using a protocol contained therein.

### BRIEF DESCRIPTION OF THE INVENTION

An objective of the invention is to provide a method and an apparatus implementing the method so as to eliminate the aforementioned problems. The objective of the invention is obtained by a method and a system that are characterized by what is disclosed in independent claims 1, 10 and 19. The preferred embodiments of the invention are disclosed in the dependent claims.

The invention is based on maintaining a database comprising definitions of correspondences between character strings, such as words and acronyms or synonyms, and replacing such character strings in the textual contents of a message to be transmitted that are found in the database with corresponding character strings before the message is delivered to the receiver. For example acronyms can thus be replaced with the corresponding full-length words.

The method and the system according to the invention have the advantage that a message can be written by means of abbreviations, which expedites the writing and enables more information to be fitted into the message. On the other hand, the receiver receives the message in an edited form, where e.g. abbreviations have been replaced with the corresponding words, whereupon the receiver does not have to know the abbreviations used.

According to a preferred embodiment of the invention, the contents of the database are at least partly specific to a sender, which means that the sender, such as a mobile system subscriber, can predetermine personal abbreviations and corresponding words, word groups or other character strings in the database. This enables the use of personal abbreviations or synonyms in writing of messages.

Furthermore, according to the preferred embodiment of the invention the contents of the database are at least partly specific to a receiver, i.e. the sender can predetermine receiver-specific abbreviations and corresponding words, word groups or other character strings in the database for use only in messages addressed to the receiver in question. This enables the use of receiver-specific messages or synonyms for writing messages, so that the same abbreviation can correspond to different words depending on the receiver of the message.

### BRIEF DESCRIPTION OF THE FIGURES

The invention will be described below in more detail in connection with the preferred embodiments and with reference to the accompanying drawings, in which
Figure 1 shows a diagram of a telecommunication system according to an embodiment of the invention, and
Figure 2 shows a structure of a database containing definitions of correspondences between character strings according to an embodiment of the invention.

### DETAILED DESCRIPTION OF THE INVENTION

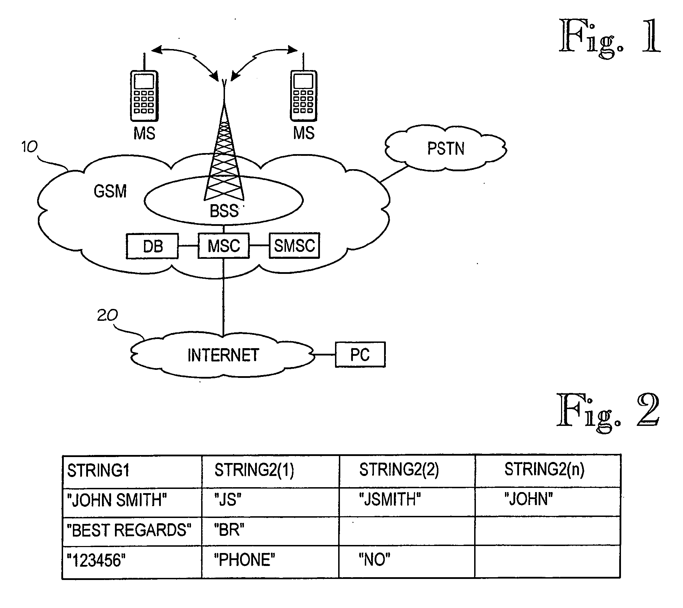

Figure 1 shows an architectural diagram of a telecommunication system where the invention can be utilized. The telecommunication system shown in the figure comprises a mobile system 10 (PLMN, Public Land based Mobile Network), which is in this example a GSM (Global System for Mobile Communication), without restricting the invention thereto, however. The mobile system can also be e.g. a 3G system, such as a universal mobile communications system (UMTS), or then the telecommunication may comprise no mobile system at all. The GSM can also comprise services supporting more advanced protocols, such as GPRS (General Packet Radio Service) and WAP (Wireless Application Protocol). These services are available to users subscribing to the services and having a terminal that supports the services. A short message service centre (SMSC) enables short message service in the mobile system and forwards short messages and stores and retransmits those short messages that have not been delivered. The SMSC can receive a short message via any network for transmission to a mobile station MS, and a short message formed e.g. by means of a keypad from a terminal for transmission to another terminal or to some other destination. A base station subsystem BSS provides an air interface for mobile stations MS to connect to the system. In this connection, a mobile station MS refers generally to a unit of a mobile subscriber and an actual terminal. A terminal can be any equipment able to communicate in the mobile system, or a combination of several terminals. The mobile system 10 is further connected e.g. to the Internet 20, to which a terminal PC, such as a personal computer, is also connected, and to a public switched telephone network PSTN. The details of the systems disclosed above are known to those skilled in the art and therefore need not be described in more detail.

Even though the invention is described by way of an example in connection with mainly short messages, the invention is not restricted thereto but it can be applied in connection with any messages containing text-mode or alphanumeric data. Examples of other applications of the invention include multimedia message service (MMS) and various Internet e-mail messages.

According to the invention, the telecommunication system comprises a database DB, which refers herein to a system element that includes not only the actual database but also means required to transmit data to/from the database. The database is situated e.g. in the mobile system 10 and it can be a separate component, as shown in Figure 1, or it can be associated with the SMSC, for instance. The database DB can also be located elsewhere and connected to the system via the Internet, for example. Furthermore, there can be several databases, or the database can be divided into physically separate units. Figure 2 shows an example of the contents of the database DB. The database DB contains definitions of correspondences between character strings, wherein one or more second character strings STRING2 (STRING2(1), STRING2(2), STRING2(n)) have been defined for each first character string STRING1 containing at least one character, the second character strings corresponding to the first character string. The character strings can contain letters, numerals, special characters and combinations thereof. Upper-case and lower-case letters can be processed as identical or different characters, depending on the situation.

Also according to the invention, in a message to be transmitted from a sender to a receiver in a telecommunication system each second character string STRING2 according to the database in the textual contents of the message is replaced with the corresponding first character string STRING1 before the message is delivered to the receiver. In the example of Figure 1, for instance a short message from a mobile station MS to another mobile station MS or to an Internet terminal PC is transmitted by first inputting the message normally to the mobile station MS. The message can be input by means of the second character strings STRING2 contained in the database DB. An address used to transmit a short message to a receiver is usually the receiver's telephone number or some other corresponding identifier. Before the message is delivered to the receiver MS or PC, a system element performs the replacement of character strings according to the definitions in the database. This takes place by checking the character strings in the textual contents of the message and replacing each located second character string STRING2 according to the database DB with the corresponding first character string STRING1. For example, according to the database shown in Figure 2, character strings 'js', 'jsmith' and 'john1' are replaced with the string 'John Smith' in the textual contents of the message. After all the located second character strings STRING2 have been replaced, the message with the edited textual contents is delivered to the receiver MS or PC. The message can thus be written by means of e.g. the abbreviation 'js', but the receiver reads from the message the corresponding character string 'John Smith'. The replacement of character strings according to the invention is advantageous e.g. in SMS-based services, which operate by transmission of a service request in the form of a short message to a particular service number (service provider), the request containing different commands and parameters, on the basis of which the service, such as information on the weather, is obtained. It is thus possible to determine a long string of commands and parameters to correspond to an abbreviation of only one or a few characters, so that the use of the service requires the subscriber only to remember the predetermined abbreviation, which will be automatically replaced with the corresponding full-length character string before the message is delivered to the service provider.

The system element performing the replacement is preferably the short message service centre SMSC or some other similar element responsible for transmission of messages. The replacement can also be performed e.g. by the transmitting terminal, such as a mobile station MS. The functionality according to the invention in the system element performing the replacement can be implemented by suitable software, for example.

Textual contents of a short message usually have a length of 160 characters. It is therefore possible that the textual contents of an original short message with a great number of abbreviations do not fit in a single short message after the replacement of character strings. According to a preferred embodiment of the invention, the textual contents are divided into two or more separate messages, which are delivered to the receiver if the length of the textual contents of the message exceeds the maximum length reserved for textual contents of one message as a result of the replacement of the character strings.

The definitions in the database DB concerning the correspondences between character strings STRING1 and STRING2 can be at least partly common, which means that they are applied to messages transmitted by any of the senders MS and PC. In addition thereto or alternatively, the definitions in the database DB concerning the correspondences between the character strings can be at least partly specific to a sender or a sender group, in which case the sender-specific or sender-group-specific definitions are only applied to messages transmitted by the sender in question or by a sender of the sender group in question. For example, the database DB can contain definitions according to which the character string 'name' is replaced with 'John Smith' in a message arriving from a particular sender MS or PC, but in a message from another sender the same string 'name' is replaced with string 'Carol Jones'. Thus, the database can preferably be edited by a system user, such as a subscriber or some other sender MS or PC of messages. The database DB can be provided with a suitable connection and a user interface for making such sender-specific definitions. Access to the database for making definitions can be obtained e.g. via the Internet or the mobile system 10, depending on the system. A system user can make definitions concerning the correspondences between character strings STRING1 and STRING2 in the database DB in any manner he/she desires. It is also possible that the system suggests abbreviations or synonyms to certain words input by the user, or the abbreviations are formed according to a predefined principle. When the user is inputting definitions into the database, it is preferably checked that the definitions contain no contradictions, or if there are any contradictions, the user is alerted. In other words, for example a user is prevented from unintentionally determining two corresponding first character strings STRING1 for one and the same second character string STRING2, unless the user also determines different uses for the alternatives.

If the database DB contains both definitions common to all the users and sender-specific or sender-group-specific definitions, the common definitions are preferably applied only to the character strings that are not provided with any sender-specific or sender-group-specific definitions. Furthermore, according to a preferred embodiment of the invention the definitions contained in the database DB concerning the correspondences between the character strings can also be at least partly specific to a receiver or a receiver group, which means that such receiver-specific or receiver-group-specific definitions are only applied to messages to be delivered to the receiver in question or to a receiver of the receiver group in question. If the definitions in the database DB are both sender-specific and receiver-specific, the user (sender) can determine, in the database, personal character string correspondences that are dependent on the addressee of the message transmitted by the user. For example, a system user can determine that in messages to a particular receiver MS or PC, the character string 'BR' is replaced with the string 'Best Regards', whereas in messages transmitted to another receiver the same character string 'BR' is replaced with the string 'Yours Sincerely'.

In the above examples, the term 'sender' or 'receiver' can refer to a mobile station MS or a terminal PC with a particular telephone number or some other corresponding subscriber identifier, or a subscriber or user using the MS or the terminal. When character strings are being replaced, the sender of the message, on the basis of which the replacement is performed, is identified e.g. based on the telephone number from which the message was transmitted. Correspondingly, the receiver is preferably determined during replacement according to an address related to the message, such as a telephone number or the like.

The replacement of character strings according to the invention is preferably carried out in response to an indication contained in a message for performing replacement. The indication can be e.g. a predetermined character or character combination contained in the textual contents, in which case the system element performing the replacement of character strings only carries out the replacement if the message comprises the agreed indication for replacement. The indication can be located either at the beginning or end of the textual contents, for example. The indication can also be included in signalling information possibly contained in the message. In such a case, the indication can be e.g. a particular predetermined parameter value or it can be included in the address data of the message. The telephone number or the like constituting the address of the short message can contain a predetermined additional number identified by the system transmitting the message, the number operating as an indication as described above for editing the textual contents of the message according to the invention. The message can also contain data on which of the alternative definitions contained in the database DB are to be applied to the message in question. For example, when the database comprises partly sender-specific and/or partly receiver-specific definitions, the indication can also contain data on the alternative definitions to be applied in the replacement of character strings. It is also possible that a system subscriber or some other sender of messages agrees in advance with the system provider on whether the service according to the invention is applied to the messages transmitted by the subscriber, and on the terms of the replacement. It is then possible to determine that the service is applied to every message or only to certain defined messages that fulfil predetermined conditions concerning the identity of the receiver, for instance.

## Claims

1. A method of transmitting messages with text-mode contents in a telecommunication system comprising means (10, 20) for transmitting messages from a sender (MS, PC) to a receiver (MS, PC), the method comprising a step of
transmitting a message from a sender to a receiver, the transmitting comprising a step of editing the text-mode content of the message before delivering the message to the receiver, **characterized in that** the method further comprises a step of
maintaining a database (DB) containing at least one first character string (STRING1) containing at least one character, and at least one corresponding second character string (STRING2) containing at least one character, the step of editing the text-mode content of the message comprising a step of
replacing each second character string according to the database in the textual contents of the message with a corresponding first character string, wherein
the definitions contained in the database (DB) concerning the correspondences between the character strings are at least partly common, the common definitions being applied to messages transmitted by any of the senders.

2. A method according to claim 1, **characterized in that** if the length of the textual contents to be transmitted exceeds the length reserved for textual contents of a single message as a result of the replacement of character strings, the step of transmitting a message further comprises steps of
dividing the textual contents into two or more separate messages and
delivering all the messages to the receiver.

3. A method according to claim 1 or 2, **characterized in that** the definitions contained in the database (DB) concerning the correspondences between the character strings are at least partly specific to a sender or a sender group, the sender-specific or sender-group-specific definitions being applied only to messages transmitted by the sender in question or by a sender of the sender group in question.

4. A method according to claim 1, 2 or 3, **characterized in that** the common definitions are only applied to character strings with no sender-specific or sender-group-specific definitions.

5. A method according to claim 1, 2, 3 or 4, **characterized in that** the definitions contained in the database (DB) concerning the correspondences between the character strings are at least partly specific to a receiver or a receiver group, the receiver-specific or receiver-group-specific definitions being applied only to messages to be delivered to the receiver in question or to a receiver of the receiver group in question.

6. A method according to any one of claims 1 to 5, **characterized in that** the step of replacing every second character string is performed in response to an indication contained in the message to carry out the replacement.

7. A method according to claim 6, **characterized in that** the definitions contained in the database (DB) concerning the correspondences between the character strings are at least partly specific to a sender or a sender group and/or at least partly specific to a receiver or a receiver group, said indication also containing data about the definitions to be applied in the replacement of character strings.

8. A method according to claim 6 or 7, **characterized in that** the indication is contained in textual contents of a message.

9. A method according to claim 6 or 7, **characterized in that** the indication is contained in address data of a message.

10. A telecommunication system comprising
means (10, 20) for transmitting messages with text-mode contents from a sender (MS, PC) to a receiver (MS, PC), and
message-editing means (SMSC) for editing the text-mode content of the message before delivering the message to the receiver, **characterized in that** the system also comprises
a database (DB) containing at least one first character string (STRING1) containing at least one character, and at least one corresponding second character string (STRING2) containing at least one character, wherein
the message-editing means (SMSC) are adapted to replace each second character string according to the database in the textual contents of the message with a corresponding first character string before the message is delivered to the receiver, and wherein
the definitions contained in the database (DB) concerning the correspondences between the character strings are at least partly common, and the message-editing means (SMSC) are adapted to apply the common definitions to messages transmitted by any of the senders.

11. A telecommunication system according to claim 10, **characterized in that** if the length of the textual contents to be transmitted exceeds the length reserved for textual contents of a single message as a result of the replacement of character strings, the message-editing means (SMSC) are also adapted to divide the textual contents into two or more separate messages to be delivered to the receiver.

12. A telecommunication system according to claim 10 or 11, **characterized in that** the definitions contained in the database (DB) concerning the correspondences between the character strings are at least partly specific to a sender or a sender group, and the message-editing means (SMSC) are adapted to apply the sender-specific or sender-group-specific definitions only to messages transmitted by the sender in question or by a sender of the sender group in question.

13. A telecommunication system according to claim 10, 11 or 12, **characterized in that** the message-editing means (SMSC) are adapted to apply the common definitions only to character strings with no sender-specific or sender-group-specific definitions.

14. A telecommunication system according to claim 10, 11, 12 or 13, **characterized in that** the definitions in the database (DB) concerning the correspondences between the character strings are at least partly specific to a receiver or a receiver group, and the message-editing means (SMSC) are adapted to apply the receiver-specific or receiver-group-specific definitions only to messages to be delivered to the receiver in question or to a receiver of the receiver group in question.

15. A telecommunication system according to any one of claims 10 to 14, **characterized in that** the message-editing means (SMSC) are adapted to replace each second character string in response to an indication contained in the message to carry out the replacement.

16. A telecommunication system according to claim 15, **characterized in that** the definitions contained in the database (DB) concerning the correspondences between the character strings are at least partly specific to a sender or a sender group and/or at least partly specific to a receiver or a receiver group, said indication also containing data about the definitions to be applied in the replacement of character strings.

17. A telecommunication system according to claim 15 or 16, **characterized in that** the indication is contained in textual contents of a message.

18. A telecommunication system according to claim 15 or 16, **characterized in that** the indication is contained in address data of a message.

19. A telecommunication system element, the system comprising means (10, 20) for transmitting messages with text-mode contents from a sender (MS, PC) to a receiver (MS, PC), the telecommunication system element being adapted to edit the text-mode content of the message before delivering the message to the receiver, wherein the system also comprises a database (DB) containing at least one first character string (STRING1) containing at least one character, and at least one corresponding second character string (STRING2) containing at least one character,
the telecommunication system element being adapted to replace each second character string according to the database in the textual contents of the message with a corresponding first character string before the message is delivered to the receiver, wherein
the definitions contained in the database (DB) concerning the correspondences between the character strings are at least partly common, and the telecommunication system element is adapted to apply the common definitions to messages transmitted by any of the senders.

20. A telecommunication system element according to claim 19, **characterized in that** if the length of the textual contents to be transmitted exceeds the length reserved for textual contents of a single message as a result of the replacement of character strings, the telecommunication system element is also adapted to divide the textual contents into two or more separate messages to be delivered to the receiver.

21. A telecommunication system element according to claim 19 or 20, **characterized in that** the definitions contained in the database (DB) concerning the correspondences between the character strings are at least partly specific to a sender or a sender group, and the telecommunication system element is adapted to apply the sender-specific or sender-group-specific definitions only to messages transmitted by the sender in question or by a sender of the sender group in question.

22. A telecommunication system element according to claim 19, 20 or 21, **characterized in that** the telecommunication system element is adapted to apply the common definitions only to character strings with no sender-specific or sender-group-specific definitions.

23. A telecommunication system element according to claim 19, 20, 21 or 22, **characterized in that** the definitions contained in the database (DB) concerning the correspondences between the character strings are at least partly specific to a receiver or a receiver group, and the telecommunication system element is thus adapted to apply the receiver-specific or receiver-group-specific definitions only to messages to be delivered to the receiver in question or to a receiver of the receiver group in question.

24. A telecommunication system element according to any one of claims 19 to 23, **characterized in that** the telecommunication system element is adapted to replace each second character string in response to an indication contained in a message to carry out the replacement.

25. A telecommunication system element according to claim 24, **characterized in that** the definitions contained in the database (DB) concerning the correspondences between the character strings are at least partly specific to a sender or a sender group and/or at least partly specific to a receiver or a receiver group, said indication also containing data about the definitions to be applied in the replacement of character strings (STRING2).

26. A telecommunication system element according to claim 24 or 25, **characterized in that** the indication is contained in textual contents of a message.

27. A telecommunication system element according to claim 24 or 25, **characterized in that** the indication is contained in address data of a message.

28. A telecommunication system element according to any one of claims 19 to 27, **characterized in that** the telecommunication system element is a short message service centre (SMSC).

29. A telecommunication system element according to any one of claims 19 to 27, **characterized in that** the telecommunication system element is a mobile station (MS).

## Patentansprüche

1. Verfahren zur Übertragung von Nachrichten mit Textmodusinhalten in einem Telekommunikationssystem, das Einrichtungen (10, 20) zum Übertragen von Nachrichten von einem Sender (MS, PC) zu einem Empfänger (MS, PC) aufweist, mit den Schritten:
Übertragen einer Nachricht von einem Sender zu einem Empfänger, wobei das Übertragen den Schritt aufweist, bei dem der Textmodusinhalt der Nachricht vor dem Übermitteln der Nachricht zu dem Empfänger aufbereitet wird,
**gekennzeichnet durch** den Schritt
Beibehalten einer Datenbank (DB), die wenigstens eine erste Zeichenreihe (STRING1), welche wenigstens ein Zeichen aufweist, und wenigstens eine entsprechende zweite Zeichenreihe (STRING2), welche wenigstens ein Zeichen aufweist, hat, wobei der Schritt zum Aufbereiten des Textmodusinhalts der Nachricht den folgenden Schritt aufweist:
Ersetzen von jeder zweiten Zeichenreihe gemäß der Datenbank in den Textinhalten der Nachricht **durch** eine entsprechende erste Zeichenreihe, worin
die in der Datenbank (DB) enthaltenen Definitionen, welche die Entsprechungen zwischen den Zeichenreihen betreffen, wenigstens teilweise allgemein sind, wobei die allgemeinen Definitionen bei Nachrichten verwendet werden, die **durch** irgendeinen der Sender Übertragen werden.

2. Verfahren nach Anspruch 1, **dadurch gekennzeichnet, dass** dann, wenn die Länge der zu übertragenden Textinhalte durch das der Ersetzen der Zeichenreihen die Länge überschreitet, die für Textinhalte einer einzelnen Nachricht reserviert ist, der Schritt zum Übertragen einer Nachricht ferner folgende Schritte aufweist:
Teilen der Textinhalte in zwei oder mehr getrennte Nachrichten, und
Übermitteln aller Nachrichten zu dem Empfänger.

3. Verfahren nach Anspruch 1 oder 2, **dadurch gekennzeichnet, dass** die in der Datenbank (DB) enthaltenen Definitionen, welche die Entsprechungen zwischen den Zeichenreihen betreffen, wenigstens teilweise für einen Sender oder eine Sendergruppe spezifisch sind, wobei die senderspezifischen oder sendergruppenspezifischen Definitionen nur bei Nachrichten verwendet werden, die durch den in Frage kommenden Sender oder durch einen Sender aus der in Frage kommenden Sendergruppe übertragen werden.

4. Verfahren nach Anspruch 1, 2 oder 3, **dadurch gekennzeichnet, dass** die allgemeinen Definitionen nur bei Zeichenreihen ohne senderspezifische oder sendergruppenspezifische Definitionen verwendet werden.

5. Verfahren nach Anspruch 1, 2, 3 oder 4, **dadurch gekennzeichnet, dass** die in der Datenbank (DB) enthaltenen Definitionen, welche die Entsprechungen zwischen Zeichenreihen betreffen, wenigstens teilweise für einen Empfänger oder eine Empfängergruppe spezifisch sind, wobei die empfängerspezifischen oder empfängergruppenspezifischen Definitionen nur bei Nachrichten verwendet werden, die zu einem in Frage kommenden Empfänger oder zu einem Empfänger aus der in Frage kommenden Empfängergruppe übermittelt werden sollen.

6. Verfahren nach einem der Ansprüche 1 bis 5, **dadurch gekennzeichnet, dass** der Schritt, bei dem jede zweite Zeichenreihe ersetzt wird, als Reaktion auf eine Anzeige durchgeführt wird, die in der Nachricht enthalten ist, um das Ersetzen durchzuführen.

7. Verfahren nach Anspruch 6, **dadurch gekennzeichnet, dass** die in der Datenbank (DB) enthaltenen Definitionen, welche die Entsprechungen zwischen den Zeichenreihen betreffen, wenigstens teilweise für einen Sender oder eine Sendergruppe und/oder wenigstens teilweise für einen Empfänger oder eine Empfängergruppe spezifisch sind, wobei die Anzeige auch Daten über die Definitionen enthält, welche beim Ersetzen von Zeichenreihen verwendet werden sollen.

8. Verfahren nach Anspruch 6 oder 7, **dadurch gekennzeichnet, dass** die Anzeige in Textinhalten einer Nachricht enthalten ist.

9. Verfahren nach Anspruch 6 oder 7, **dadurch gekennzeichnet, dass** die Anzeige in Adressdaten einer Nachricht enthalten ist.

10. Telekommunikationssystem, mit
Einrichtungen (10, 20) zum Übertragen von Nachrichten mit Textmodusinhalten von einem Sender (MS, PC) zu einem Empfänger (MS, PC), und
Nachrichtenaufbereitungseinrichtungen (SMSC) zum Aufbereiten des Textmodusinhaltes der Nachricht vor dem Übermitteln der Nachricht zu dem Empfänger,
**dadurch gekennzeichnet, dass** das System ferner aufweist:
eine Datenbank (DB) mit wenigstens einer ersten Zeichenreiche (STRING1), die wenigstens ein Zeichen enthält, und mit wenigstens einer entsprechenden zweiten Zeichenreihe (STRING2), die wenigstens ein Zeichen enthält, worin
die Nachrichtenaufbereitungseinrichtungen (SMSC) dafür ausgelegt sind, dass sie jede zweite Zeichenreihe gemäß der Datenbank in den Textinhalten der Nachricht durch eine entsprechende erste Zeichenreihe ersetzen, bevor die Nachricht zu dem Empfänger übermittelt wird, und worin
die in der Datenbank (DB) enthaltenen Definitionen, welche die Entsprechungen zwischen den Zeichenreihen betreffen, wenigstens teilweise allgemein sind, und die Nachrichtenaufbereitungseinrichtungen (SMSC) dafür ausgelegt sind, dass sie die allgemeinen Definitionen bei Nachrichten verwenden, die durch irgendeinen der Sender übertragen werden.

11. Telekommunikationssystem nach Anspruch 10, **dadurch gekennzeichnet, dass** dann, wenn die Länge der zu übertragenden Textinhalte durch das Ersetzen von Zeichenreihen die Länge überschreitet, die für Textinhalte einer einzelnen Nachricht reserviert ist, die Nachrichtenaufbereitungseinrichtungen (SMSC) auch dafür ausgelegt sind, dass sie die Textinhalten in zwei oder mehr getrennte Nachrichten teilen, die zu dem Empfänger übermittelt werden sollen.

12. Telekommunikationssystem nach Anspruch 10 oder 11, **dadurch gekennzeichnet, dass** die in der Datenbank (DB) enthaltenen Definitionen, welche die Entsprechungen zwischen den Zeichenreihen betreffen, wenigstens teilweise für einen Sender oder eine Sendergruppe spezifisch sind, und dass die Nachrichtenaufbereitungseinrichtungen (SMSC) dafür ausgelegt sind, die senderspezifischen oder sendergruppenspezifischen Definitionen nur bei Nachrichten zu verwenden, die durch den in Frage kommenden Sender oder durch einen Sender der in Frage kommenden Sendergruppe übertragen werden.

13. Telekommunikationssystem nach Anspruch 10, 11 oder 12, **dadurch gekennzeichnet, dass** die Nachrichtenaufbereitungseinrichtungen (SMSC) dafür ausgelegt sind, die allgemeinen Definitionen nur bei Zeichenreihen ohne senderspezifische oder sendergruppenspezifische Definitionen zu verwenden.

14. Telekommunikationssystem nach Anspruch 10, 11, 12 oder 13, **dadurch gekennzeichnet, dass** die Definitionen in der Datenbank (DB) welche die Entsprechungen zwischen den Zeichenreihen betreffen, wenigstens teilweise für einen Empfänger oder eine Empfängergruppe spezifisch sind, und dass die Nachrichtenaufbereitungseinrichtungen (SMSC) dafür ausgelegt sind, die empfängerspezifischen oder empfängergruppenspezifischen Definitionen nur bei Nachrichten zu verwenden, die zu dem in Frage kommenden Empfänger oder zu einem Empfänger aus der in Frage kommenden Empfängergruppe übermittelt werden sollen.

15. Telekommunikationssystem nach einem der Ansprüche 10 bis 14, **dadurch gekennzeichnet, dass** die Nachrichtenaufbereitungseinrichtungen (SMSC) dafür ausgelegt sind, als Reaktion auf eine Anzeige, die in der Nachricht enthalten ist, um das Ersetzen auszuführen, jede zweite Zeichenreihe ersetzt.

16. Telekommunikationssystem nach Anspruch 15, **dadurch gekennzeichnet, dass** die in der Datenbank (DB) enthaltenen Definitionen, welche die Entsprechungen zwischen den Zeichenreihen betreffen, wenigstens teilweise für einen Sender oder eine Sendergruppe und/oder wenigstens teilweise für einen Empfänger oder eine Empfängergruppe spezifisch sind, wobei die Anzeige auch Daten über Definitionen enthält, welche beim Ersetzen von Zeichenreihen verwendet werden sollen.

17. Telekommunikationssystem nach Anspruch 15, oder 16, **dadurch gekennzeichnet, dass** die Anzeige in Textinhalten einer Nachricht enthalten ist.

18. Telekommunikationssystem nach Anspruch 15 oder 16, **dadurch gekennzeichnet, dass** die Anzeige in Adressdaten einer Nachricht enthalten ist.

19. Telekommunikationssystemelement, wobei das System Einrichtungen (10, 20) aufweist, um Nachrichten mit Textmodusinhalten von einem Sender (MS, PC) zu einem Empfänger (MS, PC) zu übertragen, wobei das Telekommunikationssystemelement dafür ausgelegt ist, den Textmodusinhalt der Nachricht aufzubereiten, bevor die Nachricht zu dem Empfänger übermittelt wird, worin das System auch eine Datenbank (DB) mit wenigstens einer ersten Zeichenreihe (STRING1), welche wenigstens ein Zeichen enthält, und mit wenigstens einer entsprechenden zweiten Zeichenreihe (STRING2), welche wenigstens ein Zeichen enthält, aufweist,
wobei das Telekommunikationssystemelement dafür ausgelegt ist, jede zweite Zeichenreihe gemäß der Datenbank in den Textinhalten der Nachricht durch eine entsprechende erste Zeichenreihe zu ersetzen, bevor die Nachricht zu dem Empfänger übermittelt wird, worin
die in der Datenbank (DB) enthaltenen Definitionen, welche die Entsprechungen zwischen den Zeichenreihen betreffen, wenigstens teilweise allgemein sind, und das Telekommunikationssystemelement dafür ausgelegt ist, die allgemeinen Definitionen bei Nachrichten zu verwenden, die durch irgendeinen der Sender übertragen werden.

20. Telekommunikationssystemelement nach Anspruch 19, **dadurch gekennzeichnet, dass** dann, wenn die Länge der zu übertragenden Textinhalte durch das Ersetzen von Zeichenreihen die Länge überschreitet, die für Textinhalte einer einzelnen Nachricht reserviert ist, das Telekommunikationssystemelement ebenfalls dafür ausgelegt ist, die Textinhalte in zwei oder mehr getrennte Nachrichten zu teilen, die zu dem Empfänger übermittelt werden sollen.

21. Telekommunikationssystemelement nach Anspruch 19 oder 20, **dadurch gekennzeichnet, dass** die in der Datenbank (DB) enthaltenen Definitionen, welche die Entsprechungen zwischen den Zeichenreihen betreffen, wenigstens teilweise für einen Sender oder eine Sendergruppe spezifisch sind, und dass das Telekommunikationssystemelement dafür ausgelegt ist, die senderspezifischen oder sendergruppenspezifischen Definitionen nur bei Nachrichten zu verwenden, die durch den in Frage kommenden Sender oder durch einen Sender der in Frage kommenden Sendergruppe Übertragen werden.

22. Telekommunikationssystemelement nach Anspruch 19, 20 oder 21, **dadurch gekennzeichnet, dass** das Telekommunikationssystemelement dafür ausgelegt ist, die allgemeinen Definitionen nur bei Zeichenreihen ohne senderspezifische oder sendergruppenspezifische Definitionen zu verwenden.

23. Telekommunikationssystemelement nach Anspruch 19, 20, 21 oder 22, **dadurch gekennzeichnet, dass** die in der Datenbank (DB) enthaltenen Definitionen, welche die Entsprechungen zwischen den Zeichenreihen betreffen, wenigstens teilweise für einen Empfänger oder eine Empfängergruppe spezifisch sind, und dass das Telekommunikationssystemelement somit dafür ausgelegt ist, die empfängerspezifischen oder empfängergruppenspezifischen Definitionen nur bei Nachrichten zu verwenden, die zu dem in Frage kommenden Empfänger oder zu einem Empfänger aus der in Frage kommenden Empfängergruppe übermittelt werden sollen.

24. Telekommunikationssystemelement nach einem der Ansprüche 19 bis 23, **dadurch gekennzeichnet, dass** das Telekommunikationssystemelement dafür ausgelegt ist, jede zweite Zeichenreihe als Reaktion auf eine Anzeige, die in einer Nachricht enthalten ist, um das Ersetzen durchzuführen, zu ersetzen.

25. Telekommunikationssystemelement nach Anspruch 24, **dadurch gekennzeichnet, dass** die in der Datenbank (DB) enthaltenen Definitionen, welche die Entsprechungen zwischen den Zeichenreihen betreffen, wenigstens teilweise für einen Sender oder eine Sendergruppe und/oder teilweise für einen Empfänger oder eine Empfängergruppe spezifisch sind, wobei die Anzeige auch Daten über Definitionen enthält, welche beim Ersetzen von Zeichenreihen (STRING2) verwendet werden sollen.

26. Telekommunikationssystemelement nach Anspruch 24 oder 25, **dadurch gekennzeichnet, dass** die Anzeige in Textinhalten einer Nachricht enthalten ist.

27. Telekommunikationssystemelement nach Anspruch 24 oder 25, **dadurch gekennzeichnet, dass** die Anzeige in Adressdaten einer Nachricht enthalten ist.

28. Telekommunikationssystemelement nach einem der Ansprüche 19 bis 27, **dadurch gekennzeichnet, dass** das Telekommunikationssystemelement ein Kurznachrichtendienstzentrum (SMSC)ist.

29. Telekommunikationssystemelement nach einem der Ansprüche 19 bis 27, **dadurch gekennzeichnet, dass** das Telekommunikationssystemelement eine bewegliche Funkstation (MS) ist.

## Revendications

1. Méthode pour la transmission de messages avec des contenus en mode de texte dans un système de télécommunication comprenant des moyens (10, 20) pour la transmission de messages depuis un émetteur (MS, PC) et jusqu'à un récepteur (MS, PC), la méthode comprenant les étapes de
transmission d'un message depuis un émetteur et jusqu'à un récepteur, la transmission comprenant l'étape d'édition du contenu en mode de texte du message avant la remise du message au récepteur, **caractérisée en ce que** la méthode comprend, en outre, une étape de
mise à jour d'une base de données (DB) contenant au moins une première chaîne de caractères (STRING1) contenant au moins un caractère, et au moins une deuxième chaîne de caractères correspondante (STRING2) contenant au moins un caractère, l'étape d'édition du contenu en mode de texte du message comprenant une étape de
remplacement de chaque deuxième chaîne de caractères en fonction de la base de données dans les contenus textuels du message par une première chaîne de caractères correspondante, dans lequel
les définitions contenues dans la base de données (DB) concernant les correspondances entre les chaînes de caractères sont au moins partiellement communes, les définitions communes étant appliquées aux messages transmis par l'un quelconque des émetteurs.

2. Méthode selon la revendication 1, **caractérisée en ce que**, si la longueur des contenus textuels à transmettre dépasse la longueur réservée pour les contenus textuels d'un seul message du fait du remplacement des chaînes de caractères, l'étape de transmission d'un message comprend, en outre, les étapes de
division des contenus textuels en deux ou plusieurs messages séparés et de
remise de tous les messages au récepteur.

3. Méthode selon la revendication 1 ou 2, **caractérisée en ce que** les définitions contenues dans la base de données (DB) concernant les correspondances entre les chaînes de caractères sont au moins partiellement spécifiques à un émetteur ou à un groupe d'émetteurs, les définitions spécifiques à un émetteur ou à un groupe d'émetteurs étant appliquées seulement aux messages transmis par l'émetteur en question ou par un émetteur du groupe d'émetteurs en question.

4. Méthode selon la revendication 1, 2 ou 3, **caractérisée en ce que** les définitions communes sont appliquées seulement aux chaînes de caractères sans défmition spécifique à un émetteur ou à un groupe d'émetteurs.

5. Méthode selon la revendication 1, 2, 3 ou 4, **caractérisée en ce que** les définitions contenues dans la base de données (DB) concernant les correspondances entre les chaînes de caractères sont au moins partiellement spécifiques à un récepteur ou à un groupe de récepteurs, les défmitions spécifiques à un récepteur à un groupe de récepteurs étant appliquées seulement aux messages à remettre au récepteur en question ou à un récepteur du groupe de récepteurs en question.

6. Méthode selon l'une quelconque des revendications 1 à 5, **caractérisée en ce que** l'étape de remplacement de chaque deuxième chaîne de caractères est exécutée en réponse à une indication contenue dans le message pour effectuer le remplacement.

7. Méthode selon la revendication 6, **caractérisée en ce que** les définitions contenues dans la base de données (DB) concernant les correspondances entre les chaînes de caractères sont au moins partiellement spécifiques à un émetteur ou à un groupe d'émetteurs et/ou au moins partiellement spécifiques à un récepteur ou à un groupe de récepteurs, ladite indication contenant également des données au sujet des défmitions à appliquer pour le remplacement des chaînes de caractères.

8. Méthode selon la revendication 6 ou 7, **caractérisée en ce que** l'indication est contenu dans les contenus textuels d'un message.

9. Méthode selon la revendication 6 ou 7, **caractérisée en ce que** l'indication est contenu dans les données d'adresse d'un message.

10. Système de télécommunication comprenant
des moyens (10, 20) pour la transmission de messages avec des contenus en mode de texte depuisun émetteur (MS, PC) et jusqu'à un récepteur (MS, PC), et
des moyens d'édition de messages (SMSC) pour éditer le contenu en mode de texte du message avant la remise du message au récepteur, **caractérisée en ce que** le système comprend également
une base de données (DB) contenant au moins une première chaîne de caractères (STRING1) contenant au moins un caractère, et au moins une deuxième chaîne de caractères correspondante (STRING2) contenant au moins un caractère, dans laquelle
les moyens d'édition de messages (SMSC) sont adaptés pour remplacer chaque deuxième chaîne de caractères en fonction de la base de données dans les contenus textuels du message par une première chaîne de caractères correspondante avant la remise du message au récepteur, et dans lequel
les définitions contenues dans la base de données (DB) concernant les correspondances entre les chaînes de caractères sont au moins partiellement communes et les moyens d'édition de messages (SMSC) sont adaptés pour appliquer les définitions communes aux messages transmis par l'un quelconque des émetteurs.

11. Système de télécommunication selon la revendication 10, **caractérisé en ce que**, si la longueur des contenus textuels à transmettre dépasse la longueur réservée pour les contenus textuels d'un seul message du fait du remplacement des chaînes de caractères, les moyens d'édition de messages (SMSC) sont également adaptés pour diviser les contenus textuels en deux ou plusieurs messages séparés à remettre au récepteur.

12. Système de télécommunication selon la revendication 10 ou 11, **caractérisé en ce que** les définitions contenues dans la base de données (DB) concernant les correspondances entre les chaînes de caractères sont au moins partiellement spécifiques à un émetteur ou à un groupe d'émetteurs, et les moyens d'édition de messages (SMSC) sont adaptés pour appliquer les définitions spécifiques à un émetteur ou à un groupe d'émetteurs seulement aux messages transmis par l'émetteur en question ou par un émetteur du groupe d'émetteurs en question.

13. Système de télécommunication selon la revendication 10, 11 ou 12, **caractérisé en ce que** les moyens d'édition de messages (SMSC) sont adaptés pour appliquer les définitions communes seulement aux chaînes de caractères sans défmition spécifique à un émetteur ou à un groupe d'émetteurs.

14. Système de télécommunication selon la revendication 10, 11, 12 ou 13, **caractérisé en ce que** les définitions dans la base de données (DB) concernant les correspondances entre les chaînes de caractères sont au moins partiellement spécifiques à un récepteur ou à un groupe de récepteurs, et les moyens d'édition de messages (SMSC) sont adaptés pour appliquer les définitions spécifiques à un récepteur à un groupe de récepteurs seulement aux messages à remettre au récepteur en question ou à un récepteur du groupe de récepteurs en question.

15. Système de télécommunication selon l'une quelconque des revendications 10 à 14, **caractérisé en ce que** les moyens d'édition de messages (SMSC) sont adaptés pour remplacer chaque deuxième chaîne de caractères est exécutée en réponse à une indication contenue dans le message pour effectuer le remplacement.

16. Système de télécommunication selon la revendication 15, **caractérisé en ce que** les définitions contenues dans la base de données (DB) concernant les correspondances entre les chaînes de caractères sont au moins partiellement spécifiques à un émetteur ou à un groupe d'émetteurs et/ou au moins partiellement spécifiques à un récepteur ou à un groupe de récepteurs, ladite indication contenant également des données au sujet des définitions à appliquer pour le remplacement des chaînes de caractères.

17. Système de télécommunication selon la revendication 15 ou 16, **caractérisé en ce que** l'indication est contenue dans les contenus textuels d'un message.

18. Système de télécommunication selon la revendication 15 ou 16, **caractérisé en ce que** l'indication est contenu dans les données d'adresse d'un message.

19. Elément de système de télécommunication, le système comprenant des moyens (10, 20) pour la transmission de messages avec des contenus en mode de texte entre un émetteur (MS, PC) et un récepteur (MS, PC), l'élément de système de télécommunication étant adapté pour éditer le contenu en mode de texte du message avant de remettre le message au récepteur, dans lequel le système comprend également une base de données (DB) contenant au moins une première chaîne de caractères (STRING1) contenant au moins un caractère, et au moins une deuxième chaîne de caractères correspondante (STRING2) contenant au moins un caractère,
l'élément de système de télécommunication étant adapté pour remplacer chaque deuxième chaîne de caractères en fonction de la base de données dans les contenus textuels du message par une première chaîne de caractères correspondante avant la remise du message au récepteur, dans lequel
les définitions contenues dans la base de données (DB) concernant les correspondances entre les chaînes de caractères sont au moins partiellement communes, et l'élément de système de télécommunication est adapté pour appliquer les définitions communes aux messages transmis par l'un quelconque des émetteurs.

20. Elément de système de télécommunication selon la revendication 19, **caractérisé en ce que**, si la longueur des contenus textuels à transmettre dépasse la longueur réservée pour les contenus textuels d'un seul message du fait du remplacement des chaînes de caractères, l'élément de système de télécommunication est également adapté pour diviser les contenus textuels en deux ou plusieurs messages séparés à remettre au récepteur.

21. Elément de système de télécommunication selon la revendication 19 ou 20, **caractérisé en ce que** les définitions contenues dans la base de données (DB) concernant les correspondances entre les chaînes de caractères sont au moins partiellement spécifiques à un émetteur ou à un groupe d'émetteurs, et l'élément de système de télécommunication est également adapté pour appliquer les définitions spécifiques à un émetteur ou à un groupe d'émetteurs seulement aux messages transmis par l'émetteur en question ou par un émetteur du groupe d'émetteurs en question.

22. Elément de système de télécommunication selon la revendication 19, 20 ou 21, **caractérisé en ce que** l'élément de système de télécommunication est adapté pour appliquer les définitions communes seulement aux chaînes de caractères sans définitions spécifiques à un émetteur ou à un groupe d'émetteurs.

23. Elément de système de télécommunication selon la revendication 19, 20, 21 ou 22, **caractérisé en ce que** les définitions contenues dans la base de données (DB) concernant les correspondances entre les chaînes de caractères sont au moins partiellement spécifiques à un récepteur ou à un groupe de récepteurs, et l'élément de système de télécommunication est donc adapté pour appliquer les défmitions spécifiques à un récepteur ou à un groupe de récepteurs seulement aux messages à remettre au récepteur en question ou à un récepteur du groupe de récepteurs en question.

24. Elément de système de télécommunication selon l'une quelconque des revendications 19 à 23, **caractérisé en ce que** l'élément de système de télécommunication est adapté pour remplacer chaque deuxième chaîne de caractères en réponse à une indication contenue dans un message pour effectuer le remplacement.

25. Elément de système de télécommunication selon la revendication 24, **caractérisé en ce que** les définitions contenues dans la base de données (DB) concernant les correspondances entre les chaînes de caractères sont au moins partiellement spécifiques à un émetteur ou à un groupe d'émetteurs et/ou au moins partiellement spécifiques à un récepteur ou à un groupe de récepteurs, ladite indication contenant également des données au sujet des définitions à appliquer pour le remplacement des chaînes de caractères (STRING 2).

26. Elément de système de télécommunication selon la revendication 24 ou 25, **caractérisé en ce que** l'indication est contenue dans les contenus textuels d'un message.

27. Elément de système de télécommunication selon la revendication 24 ou 25, **caractérisé en ce que** l'indication est contenu dans les données d'adresse d'un message.

28. Elément de système de télécommunication selon l'une quelconque des revendications 19 à 27, **caractérisé en ce que** l'élément de système de télécommunication est un centre de service de messages courts (SMSC).

29. Elément de système de télécommunication selon l'une quelconque des revendications 19 à 27, **caractérisé en ce que** l'élément de système de télécommunication est une station mobile (MS).
